# EUROPÄISCHE PATENTANMELDUNG

(11) **EP 1 079 400 A2**
(43) Veröffentlichungstag der Anmeldung: **28.02.2001**
(21) Anmeldenummer: 00117582.7
(22) Anmeldetag: 16.08.2000
(51) Int. Cl.: H01G 4/228

(54) **Kondensator**

(30) Priorität: 19.08.1999 DE 29914584 U
(71) Anmelder: FILTEC FILTERTECHNOLOGIE FUR DIE ELEKTRONIKINDUSTRIE GmbH, D-59557 Lippstadt (DE)
(72) Erfinder: Meppelink, Jan, Prof. Dr.-Ing., 59494 Soest (DE); Kühle, Jörg, 59514 Welver-Borgeln (DE); Wallmeier, Frank, 59558 Lippstadt (DE); Dingenotto, Meinolf, 33758 Schloss Holte (DE)
(74) Vertreter: Strauss, H.-J., Dr.

(57) **Zusammenfassung**

Um einen Kondensator mit einer an einen Signalleiter (7) angeschlossenen Signalelektrode (2), einer an einem Masseleiter (9) angeschlossenen Masseelektrode (3) und einem Dielektrikum (4) zwischen beiden so weiterzubilden, dass laufzeitbedingte Begrenzungen in höhere Frequenzbereiche verlagert werden, ist, um die Anwendbarkeit im Frequenzbereich darunter zu erweitern, der Signalleiter (7) oder der Masseleiter (9) von der Signalelektrode (2) bzw. der Masseelektrode (3) und somit vom Dielektrikum (4) - hoher DK - beabstandet und in mindestens 2 in Richtung der Signalfortpflanzung getrennte Leiterbereiche (2.1, 2.2, 2.3, 2.4; 3.1, 3.2, 3.3, 3.4) unterteilt ist, von denen jeder über mindestens einen Leiterverbinder (5; 6) mit dem Signalleiter (7) bzw. dem Masseleiter (9) elektrisch verbunden ist.

## Beschreibung

Die Erfindung betrifft einen Kondensator mit einer an einen Signalleiter angeschlossenen Signalelektrode und einer an einem Masseleiter angeschlossenen Masseelektrode, wobei zwischen Signal- und Masseelektrode eine dielektrischen Schicht hoher DK vorgesehen ist.

Bekannt sind Röhrchen- oder Durchgangskondensatoren und daneben auch die Chip-Kondensatoren, die mit entsprechenden Kapazitätswerten ausgestattet, als Filter-Kondensatoren eingesetzt werden. Kapazitätswerte und Spannungsfestigkeit dieser Kondensatoren sind dabei im allgemeinen auf die gewünschten Werte abstellbar, jedoch zeigt sich beim Einsatz solcher Kondensatoren insbesondere mit Dielektrika hoher Dielektrizitätskonstanten bei hohen Frequenzen (etwa oberhalb von 10³), dass Laufzeiteffekte die Einsatzmöglichkeiten begrenzen. Diese Grenzen liegen dort, wo solche Laufzeiteffekte ein gleichzeitiges Aufladen des Kondensators über seine gesamte Belag-Fläche nicht zulassen.

Somit stellt sich das dieser Erfindung zugrunde liegende Problem, einen Kondensator so weiterzubilden, dass solche laufzeitbedingte Begrenzung in höhere Frequenzbereich verlagern wird, um die Anwendbarkeit im Frequenzbereich darunter zu erweitern.

Diese Aufgabe wird nach der Erfindung durch die im Kennzeichen des Hauptanspruchs genannten Merkmals gelöst; vorteilhafte Weiterbildungen und bevorzugte Ausführungsformen beschreiben die Unteransprüche.

Um diese Aufgabenstellung zu lösen, wird der Signal- oder der Masseleiter in einem Abstand von den Belägen verlaufend angeordnet, so dass die hohe Dielektrizitätskonstante des Dielektrikums des Kondensators (DK etwa im Bereich von 10³ - 2 x 10⁴) keinen Einfluss auf diese Leiter mehr ausüben kann und die Fortpflanzungsgeschwindigkeit des Signals auf diesen Leiter nicht verringert ist. Dazu reicht im allgemeinen bereits eine relativ geringe Luftspalte aus. Somit verlaufen Signal- oder Masseleiter nicht auf dem Dielektrikum der Kondensatoren mit hoher Dielektrizitätskonstanten, sondern in einem Medium mit einer niedrigen Dielektritätskonstante (DK etwa im Bereich von 10⁰ - 10¹) und die Fortpflanzungsgeschwindigkeit auf dem frei verlaufenden Signal- bzw. Masseleiter entspricht der in Luft; sie kann so als "unverzögert" angesehen werden, während die Fortpflanzungsgeschwindigkeit bei Anliegen am Dielektrikum wegen hoher Dielektrizitätskonstanten wesentlich verringert ist,

Dabei ist diejenige der Elektroden (Signal- oder Masseelektrode), die dem von dem dielektrischen Material beabstandeten Leiter zugeordnet ist, in Richtung der Signalfortpflanzung in einzelne Leiterbereiche unterteilt, die gegeneinander elektrisch isoliert sind. Diese Leiterbereiche sind über je einen gesonderten Anschlussleiter elektrisch mit dem gegenüber dem Dielektrikum beabstandeten Leiter elektrisch verbunden, so dass die elektrisch gegeneinander isolierten Leiterbereiche von den Signal- oder Masseleitern aus gesehen in Art einer Parallelschaltung geschaltet sind. Da sich die Signale auf dem im Abstand vom Dielektrikum angeordneten Signal- oder Masseleiter unverzögert fortpflanzen, stehen die Signalspannungen (nahezu) gleichzeitig an den einem Kondensator zugeordneten Anschlussleiter an, so dass die einzelnen Leiterbereiche (nahezu) gleichzeitig auf- bzw. entladen werden. Durch diese "Gleichzeitigkeit' werden Laufzeitunterschiede unterdrückt und deren störender Einflussbereich hin zu höheren Frequenzen verschoben. Vorteilhaft ist jeder Leiterverbinder etwa punktförmig an den zugeordneten Signal- bzw. Masseleiter angeschlossen. Dieser Anschluss ist vorteilhaft in der Mitte des Leiters angeordnet: dabei ist hier unter "Mitte" die in Fortpflanzungsrichtung der Signale liegende Mitte des Leiterbereichs zu verstehen. Diese Art des Anschlusses stellt ein (nahezu) gleichzeitiges Auf- bzw. Entladen des so unterteilten Kondensators sicher.

Um die elektrischen Eigenschaften beeinflussen zu können, sind die gegeneinander isolierten Leiterbereiche über elektronische Bauelemente in Art einer Reihenschaltung verbunden. Als Bauelemente können dabei Widerstandselemente, vorzugsweise rein ohm'sche Widerstände, vorgesehen sein. Wegen der Abhängigkeit der Fortpflanzungsgeschwindigkeit der Signale auf dem Signal- bzw. dem Masseleiter von der Dielektrizitätskonstanten des diesen Leiter umgebenden Materials und wegen der beim Einschalten von Widerständen in signalführende Leiter entstehenden Unstetigkeitsstellen sollen die Widerstandswerte diese Widerstände im Bereich des Wellenwiderstands des mit einem Dielektrikum hoher Dielektrizitätskonstanten in Wechselwirkung stehenden Signal- oder des Masseleiters liegen. Durch diese Auslegung werden durch das Einschalten bedingte Unstetigkeitsstellen klein gehalten.

Diese einem Signalleiter zugeordneten Einzelbeläge eines Kondensators sind in einer Weiterbildung über elektrische Bauelemente verbunden, wozu Widerstände. Varistoren o. dgl. eingesetzt werden können. Als Widerstandsbauelemente werden vorteilhaft SMD-Bauelemente vorgesehen, die auf zwei benachbarte Leiterbereiche aufgelötet, eine Überbrückung darstellen und zwei benachbarte Leiterbereiche in Art einer Reihenschaltung elektrisch über den Widerstand miteinander verbindet. Als derartige Widerstandsbauelemente werden in einer anderen Ausführungsform auch aus der Planartechnik bekannte, etwa im Siebdruckverfahren aufgebrachte Streifen aus Widerstandspasten vorgesehen, die zwei benachbarte Leiterbereiche in gleicher Weise miteinander verbinden. Um eine Spannungsbegrenzung, inbesondere eine Spitzenspannungsbegrenzung bei Stoßbelastungen zu erreichen, eignen sich Varistoren, wobei der Wert der Begrenzungsspannung durch geeignete Varistor-Auswahl oder des varistorartigen Materials erreicht werden kann.

Neben Widerständen rein ohm'schen Charakters können auch induktive Glieder zur Beschaltung der Signalleiter oder der Masseableiter vorgesehen sein, wodurch die ohm'schen Widerständen auch eine induktive Komponente erhalten. Dazu ist der Signalleiter oder der Masseleiter mit mindestens einer Induktivität beschaltet. Als Induktivitäten können SMD-Spulen in den Signal- bzw. Masseableiter geschaltet sein. Alternativ können auch hier Schichten oder Ringe aus einem ferritischen Material an bzw. auf den Signal- bzw. Masseableiter vorgesehen sein.

Bei einer vorteilhaften Weiterbildung sind Induktivitäten zwischen zumindest einigen der Anschluss-Stellen der Leiterverbinder zweier aufeinander folgender Leiterbereiche von in einzelne Leiterbereiche unterteilten Signal- bzw. Masseelektroden vorgesehen. Als Induktivitäten können SMD-Spulen in den Signal- bzw. Masseleiter geschaltet sein. Alternativ können auch hier Perlen oder Ringe aus einem ferritischen Material an bzw. auf den Signal- bzw. Masseleiter vorgesehen sein, die vorteilhaft im Zwischenbereich der unterteilten Beläge angeordnet sind. Durch diese Ausbildung entstehen Filter mit parallel geschalteten Querkondensatoren, die über Längsinduktivitäten verbunden sind. Die Filtereigenschaften solcher Anordnungen können durch Wahl des Ring-Materials und/oder der Kondensatoren auf den Bedarf eingestellt werden. Daneben besteht auch die Möglichkeit, in dem frei verlaufenen Signal- bzw. Masseleiter induktive Bauelemente - etwa SMD-Spulen - einzufügen, die dann in Serie zur Signal- bzw. Masseverbindung liegen.

Das Wesen der Erfindung wird an Hand der in den Figuren 1 bis 3 dargestellten Ausführungsbeispielen näher erläutert; dabei zeigen:
- Fig. 01:: Kondensatoranordnung mit ungeteilten Elektroden an einem Dielektrikum hoher Dielektriziztätskonstanten;
- Fig. 02:: Kondensatoranordnung mit unterteilter Signalelektrode im Abstand von einem Dielektrikum hoher DK;
- Fig. 03:: Kondensatoranordnung mit unterteilter Masseelelektrode im Abstand von einem Dielektrikum hoher DK;

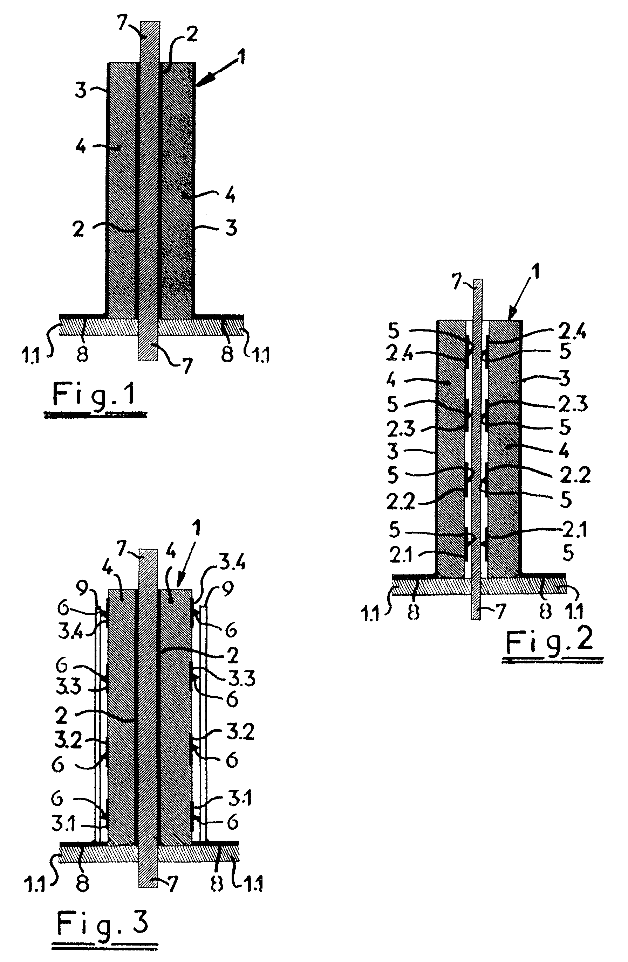

In den Figuren 1 bis 3 ist eine Ausführungsform des Kondensators 1, der auf eine Basis 1.1 aufgesetzt ist, beispielhaft dargestellt. Der Signalleiter 7 durchquert dieses Basis 1.1, während die Masse-Zuführung als metallische Beschichtung 8 auf der Basis angedeutet ist. Die Figur 1 zeigt einen üblichen Kondensator 1, bei dem die Signalelektrode 2 und die Masseelektrode 3 unmittelbar an dem Dielektrikum 4 anliegen. Die Unterteilung (in hier je vier Teilelektroden 2.1, 2.2, 2.3 und 2.4) einer mit dem Signalleiter 7 verbundenen Elektrode 2 zeigt Fig. 2. Bei der mit dem Masseleiter 9 verbundenen Elektrode 3 werden so die Teilelektroden 3.2, 3.2, 3.3 und 3.4 gebildet, wie Fig. 3 zeigt.

Bei der nicht unterteilten Anordnung (Fig. 1) liegen sowohl die von dem Signalleiter 7 gebildete Signalelektrode 2 als auch die Masseelektrode 3 unmittelbar an dein Dielektrikum 4 an. Wegen der dabei eintretenden Wechselwirkung der Leiter mit dem Dielektrikum ist hierbei die Signal-Fortpflanzungsgeschwindigkeit verringert und das Auf- bzw. Entladen der Signal- bzw. Masseelektrode 2 bzw. 3 zeigt dadurch einen zeitlich verzögerten Verlauf, der von der Verringerung der Fortpflanzungsgeschwindigkeit infolge der Wechselwirkung des das Signal führenden Leiters mit dem Dielektrikum abhängt. Dies macht sich besonders dann bemerkbar, wenn der Kondensator 1 zum Erreichen hoher Kapazitäten ein Dielektrikum mit hoher Dielektrizitätskonstanten (etwa in der Größenordnung von 10³ bis 10⁴) aufweist, und wenn der Einsatzbereich des Kondensators 1 bis zu so hohen Frequenzen (Giga-Hertz-Bereich) reicht, dass sich solche Laufzeitseffekte störend bemerkbar machen.

Diese zeitliche Verzögerung kann aufgehoben werden, wenn eine Unterteilung der Signalelektrode erfolgt und die Teilelektroden mit einem Leiter verbunden werden, auf dem sich die Signale unverzögert fortpflanzen. Dazu müssen die das Signal führenden Leiter so angeordnet sein, dass sie von der Dielektrizitätskonstanten des Dielektrikums unbeeinflusst sind. Eine solche Anordnung, bei der solche störenden Laufzeiteffekte dadurch unterbunden sind, dass einer der signalführenden Leiter, der Signalleiter 7 oder der Masseleiter 9, vom Dielektrikum beabstandetet angeordnet ist, und dass die den Kondensator bildenden Beläge 2 bzw. 3 in Teilelektroden 2.1, 2.2, 2.3 und 2.4 bzw. 3.1, 3.2, 3.3 und 3.4 unterteilt sind, die mit dem Signalleiter 7 bzw. mit der Masseleiter 9 über Leiter-Verbinder 5 bzw. 6 verbunden sind, ist in den Figuren 2 (für einen vom Dielektrikum beabstandeten Signalleiter) und 3 (für einen vom Dielektrikum beabstandeten Masseleiter) dargestellt. Da sich bei dieser Anordnung keine relevante Wechselwirkung zwischen Leiter und Dielektrikum einstellt, erfolgt die Signalfortpflanzung unbeeinflusst und die Teilelektroden werden (nahezu) gleichzeitig auf- oder entladen, so dass im benutzten Frequenzbereich keine signifikanten, laufzeitbedingten Störeinflüsse auftreten, die zu höheren Frequenzbereichen verschoben sind.

In Figur 2 ist der Durchmesser des Signalleiters 7 deutlich kleiner als der Durchmesser des Durchführungsloches im Dielektrikum 4, so dass der Signalleiter 7 vom Dielektrikum 4 einen deutlichen Abstand aufweist. Die Teilelektroden 2.1, 2.2, 2.3 und 2.4 sind über Leiter-Verbindern 5 mit dem Signalleiter 7 verbunden, so dass dieser im Abstand von diesen Teilelektroden und dem Dielektrikum 4 verläuft. Analoge Verhältnisse sind gegeben, wenn der über die metallische Beschichtung 8 mit der allgemeinen Masse verbundene Masseleiter 9 im Abstand vom Dielektrikum 4 angeordnet ist (Fig. 3). Hier sind die Teilektroden 3.1, 3.2, 3.3 und 3.4 über Leiterverbinder 6 mit dem Masseleiter 9 verbunden, so dass auch hier die verzögernde Wirkung der Dielektrizitätskonstanten auf die Fortpflanzungsgeschwindigkeit entfällt. In beiden Fällen erfolgt das Auf- und Entladen der Teilelektroden unverzögert; Laufzeitunterschiede sind unterbunden.

## Patentansprüche

1. Kondensator mit einer an einen Signalleiter angeschlossenen Signalelektrode und einer an einem Masseleiter angeschlossenen Masseelektrode, wobei zwischen Signal- und Masseelektrode eine dielektrischen Schicht hoher DK vorgesehen ist, **dadurch gekennzeichnet,** dass der Signalleiter (7) oder der Masseleiter (9) von der Signalelektrode (2) bzw. der Masseelektrode (3) und somit vom Dielektrikum hoher DK (4) beabstandet und in mindestens 2 in Richtung der Signalfortpflanzung getrennte Leiterbereiche (2.1, 2.2, 2.3, 2.4; 3.1, 3.2, 3.3, 3.4) unterteilt ist, von denen jeder über mindestens einen Leiterverbinder (5; 6) mit dem Signalleiter (7) bzw. dem Masseleiter (9) elektrisch verbunden ist.

2. Kondensator nach Anspruch 1, **dadurch gekennzeichnet,** dass die elektrischen Leiterverbinder (5; 6) zu den Leiterbereichen (2.1, 2.2, 2.3, 2.4; 3.1, 3.2, 3.3, 3.4) von Signal- bzw. Masseelektrode im wesentlichen punktförmig an den zugeordneten Signal- bzw. Masseleiter (7; 9) angeschlossen sind.

3. Kondensator nach Anspruch 2, **dadurch gekennzeichnet,** dass die gegeneinander isolierten Leiterbereiche (2.1, 2.2, 2.3, 2.4; 3.1, 3.2, 3.3, 3.4) über elektronische Bauelemente in Art einer Reihenschaltung verbunden sind.

4. Kondensator nach Anspruch 3, **dadurch gekennzeichnet,** dass als elektronische Bauelemente Widerstandselemente, vorzugsweise ohm'sche Widerstandselemente vorgesehen sind.

5. Kondensator nach Anspruch 4, **dadurch gekennzeichnet,** dass die Widerstandswerte der Widerstandselemente im Bereich des Wellenwiderstands von mit einem Material hoher Dielektrizitätskonstanten in Wechselwirkung stehenden Signal- bzw. Masseleiter liegen.

6. Kondensator nach Anspruch 4 oder 5, **dadurch gekennzeichnet,** dass als zwei benachbarte Leiterbereiche (2.1, 2.2; 2.2, 2.3; 2.3, 2.4; 3.1, 3.2; 3.2, 3.3; 3.3, 3.4) verbindende Widerstände aufgelötete SMD-Bauelemente vorgesehen sind, die diese Leiterbereiche in Art einer Reihenschaltung elektrisch über die Widerstände miteinander verbinden.

7. Kondensator nach Anspruch 4 oder 5, **dadurch gekennzeichnet,** dass als zwei benachbarte Leiterbereiche (2.1, 2.2; 2.2, 2.3; 2.3, 2.4; 3.1, 3.2; 3.2, 3.3; 3.3, 3.4) verbindende Widerstände aufgebrachte Streifen aus Widerstandspaste vorgesehen sind, die diese Leiterbereiche in Art einer Reihenschaltung elektrisch über die Widerstände miteinander verbinden.
